# EUROPEAN PATENT APPLICATION

(11) **EP 4 660 462 A1**
(43) Date of publication of application: **10.12.2025**
(21) Application number: 23919825.2
(22) Date of filing: 05.09.2023
(51) Int. Cl.: F15B 11/00, F04B 49/06

(54) **HYDRAULIC SYSTEM**

(30) Priority: 03.02.2023 JP 2023015528
(71) Applicant: KAWASAKI JUKOGYO KABUSHIKI KAISHA, Kobe-shi, Hyogo 650-8670 (JP)
(72) Inventor: IMAMURA, Yukito, Hyogo, 650-8670 (JP); TANAKA, Hideki, Hyogo, 650-8670 (JP)
(74) Representative: Dehns
(86) International application number: PCT/JP2023/032401
(87) International publication number: WO 2024/161689

(57) **Abstract**

A hydraulic system (1) according to one embodiment includes: a hydraulic pump (2) that supplies hydraulic oil to a hydraulic actuator (12) at a time of moving the hydraulic actuator (12), the hydraulic pump (2) being a variable displacement pump; an electric motor (3) that drives the hydraulic pump (2); a regulator (21) that changes a displacement of the hydraulic pump (2); and control circuitry (4) that controls the electric motor (3) and the regulator (21). When a state where a torque of the electric motor (3) exceeds a rated torque has continued for a predetermined period, the control circuitry (4) decreases the displacement of the hydraulic pump (2) and increases a rotation speed of the electric motor (3) under a condition that a delivery flow rate of the hydraulic pump (2) is maintained, such that the torque of the electric motor (3) becomes the rated torque or less.

## Description

### Technical Field

The present disclosure relates to a hydraulic system that electrically changes the delivery flow rate of a hydraulic pump.

### Background Art

Conventionally, there has been a known hydraulic system that electrically changes the delivery flow rate of a hydraulic pump. For example, Patent Literature 1 discloses a hydraulic system that includes: a hydraulic pump of a variable displacement type; an electric motor that drives the hydraulic pump; a regulator that changes the displacement of the hydraulic pump; and control circuitry that controls the electric motor. In Patent Literature 1, the hydraulic system is referred to as an "inverter-driven hydraulic apparatus" and the regulator is referred to as a "pressure regulating mechanism". In Patent Literature 1, the control circuitry includes an inverter and main controlling circuitry, and the main controlling circuitry is referred to as a "controller".

### Citation List

### Patent Literature

PTL 1: Japanese Laid-Open Patent Application Publication No. 2019-183944

### Summary of Invention

### Technical Problem

In the hydraulic system of Patent Literature 1, the regulator mechanically changes the displacement of the hydraulic pump based on the delivery pressure of the hydraulic pump. To be more specific, when the delivery pressure of the hydraulic pump is lower than a cutoff start pressure, the regulator maximizes the displacement of the hydraulic pump, and when the delivery pressure of the hydraulic pump exceeds the cutoff start pressure, the regulator decreases the displacement of the hydraulic pump in accordance with an increase in the delivery pressure of the hydraulic pump.

On the other hand, when the delivery pressure of the hydraulic pump is lower than the cutoff start pressure, the control circuitry decreases the rotation speed of the electric motor in accordance with an increase in the delivery pressure of the hydraulic pump, and when the delivery pressure of the hydraulic pump exceeds the cutoff start pressure, the control circuitry increases the rotation speed of the electric motor in accordance with an increase in the torque of the electric motor.

In a hydraulic system including an electric motor that drives a hydraulic pump, the electric motor used therein may have a rated output that is greater than the maximum output required for the electric motor. In this case, however, the size of the electric motor is large, and the cost of the electric motor is high. Meanwhile, the electric motor is capable of exerting, temporarily, a higher output than its rated output. However, thereafter, it is desirable to change the rotation speed of the electric motor and the displacement of the hydraulic pump to bring the output of the electric motor down to the rated output or less.

In view of the above, an object of the present disclosure is to provide a hydraulic system in which an electric motor whose rated output is less than the maximum output required for the electric motor can be used.

### Solution to Problem

The present disclosure provides a hydraulic system including: a hydraulic pump that supplies hydraulic oil to a hydraulic actuator at a time of moving the hydraulic actuator, the hydraulic pump being a variable displacement pump; an electric motor that drives the hydraulic pump; a regulator that changes a displacement of the hydraulic pump; and control circuitry that controls the electric motor and the regulator. When a state where a torque of the electric motor exceeds a rated torque has continued for a predetermined period, the control circuitry decreases the displacement of the hydraulic pump and increases a rotation speed of the electric motor under a condition that a delivery flow rate of the hydraulic pump is maintained, such that the torque of the electric motor becomes the rated torque or less.

### Advantageous Effects of Invention

The present disclosure provides a hydraulic system in which an electric motor whose rated output is less than the maximum output required for the electric motor can be used.

### Brief Description of Drawings

FIG. 1 shows a schematic configuration of a hydraulic system according to one embodiment.
FIG. 2 is a flowchart of control performed by control circuitry.
FIG. 3 is a graph showing a relationship between the rotation speed and torque of an electric motor and showing a case where the operating state of the electric motor shifts along a line passing through the inside of a rated region.
FIG. 4 is a graph showing a relationship between the rotation speed and torque of the electric motor and showing a case where the operating state of the electric motor shifts along a line passing outside the rated region.
FIG. 5 is a map of electric motor efficiency.
FIG. 6 is a map of pump efficiency.

### Description of Embodiments

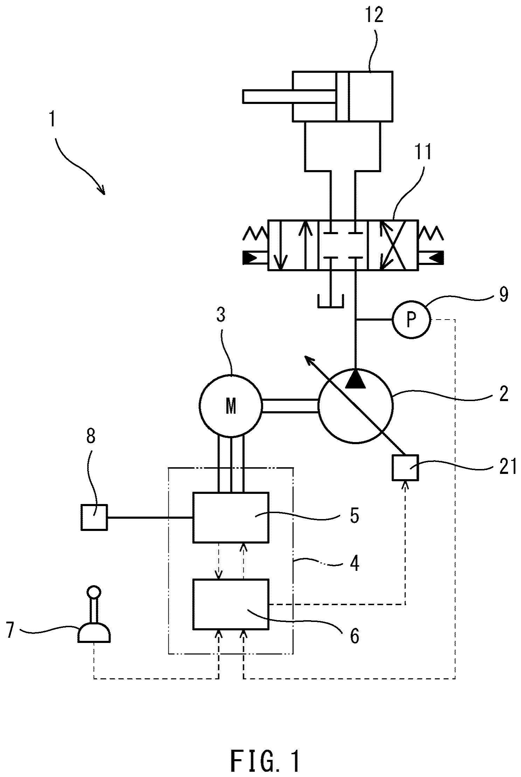

FIG. 1 shows a hydraulic system 1 according to one embodiment. The hydraulic system 1 electrically changes a delivery flow rate Q of a hydraulic pump 2, which is a variable displacement pump.

Specifically, the hydraulic system 1 includes: the hydraulic pump 2; an electric motor 3, which drives the hydraulic pump 2; a regulator 21, which changes a displacement q of the hydraulic pump 2; and control circuitry 4, which controls the electric motor 3 and the regulator 21. The displacement q is a delivery amount per rotation of the hydraulic pump 2, and the delivery flow rate Q is the product of the displacement q of the hydraulic pump 2 and a rotation speed N of the electric motor 3. For example, Q is in units of L/min; q is in units of L/rotation; and N is in units of rotation/min.

The hydraulic pump 2 supplies hydraulic oil to a hydraulic actuator 12 at the time of moving the hydraulic actuator 12. For example, the hydraulic pump 2 is connected to the hydraulic actuator 12 via a switching valve 11. The hydraulic actuator 12 may be an actuator that moves bi-directionally in accordance with the supply of pressurized oil thereto, such as a hydraulic motor or a double-acting cylinder, or may be an actuator that moves in a single direction in accordance with the supply of the pressurized oil thereto, such as a single-acting cylinder. In the former case, the switching valve 11 is a three-position valve, whereas in the latter case, the switching valve 11 is a two-position valve.

In the present embodiment, the hydraulic pump 2 is an axial piston pump, such as a swash plate pump or a bent axis pump. Alternatively, the hydraulic pump 2 may be a different type of pump, such as a vane pump.

A displacement command is outputted from the control circuitry 4 to the regulator 21, and the regulator 21 changes the displacement q of the hydraulic pump 2 in accordance with the displacement command. For example, the displacement command is a command current. For example, in a case where the hydraulic pump 2 is a swash plate pump, the regulator 21 may electrically change a hydraulic pressure applied to a servo piston coupled to the swash plate of the hydraulic pump 2, or may be an electric actuator coupled to the swash plate of the hydraulic pump 2.

The electric motor 3 is, for example, a servomotor. Alternatively, the electric motor 3 may be a different type of motor, such as an induction motor.

Regarding the control circuitry 4, the functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

In the present embodiment, the control circuitry 4 includes: an inverter 5 located between the electric motor 3 and a power source 8; and main controlling circuitry 6, which outputs a command to the inverter 5. The power source 8 may be a battery, or may be a commercial AC power source. In the former case, the inverter 5 includes an inverter circuit, whereas in the latter case, the inverter 5 includes a converter circuit and an inverter circuit.

The present embodiment adopts an operator 7, which receives an operation to move the hydraulic actuator 12. A speed command to the hydraulic actuator 12 is inputted from the operator 7 to the main controlling circuitry 6. For example, in a case where the operator 7 includes an operating lever, the speed command to the hydraulic actuator 12 increases in accordance with an increase in the inclination angle of the operating lever.

In the present embodiment, the main controlling circuitry 6 outputs a rotation speed command to the inverter 5. The inverter 5 can acquire the rotation speed N and torque T of the electric motor 3, and performs speed feedback control and torque feedback control. The rotation speed N and torque T of the electric motor 3 are inputted to the main controlling circuitry 6 from the inverter 5. Alternatively, the main controlling circuitry 6 may perform the speed feedback control and output a torque command obtained therefrom to the inverter 5. Then, the inverter 5 may perform the torque feedback control.

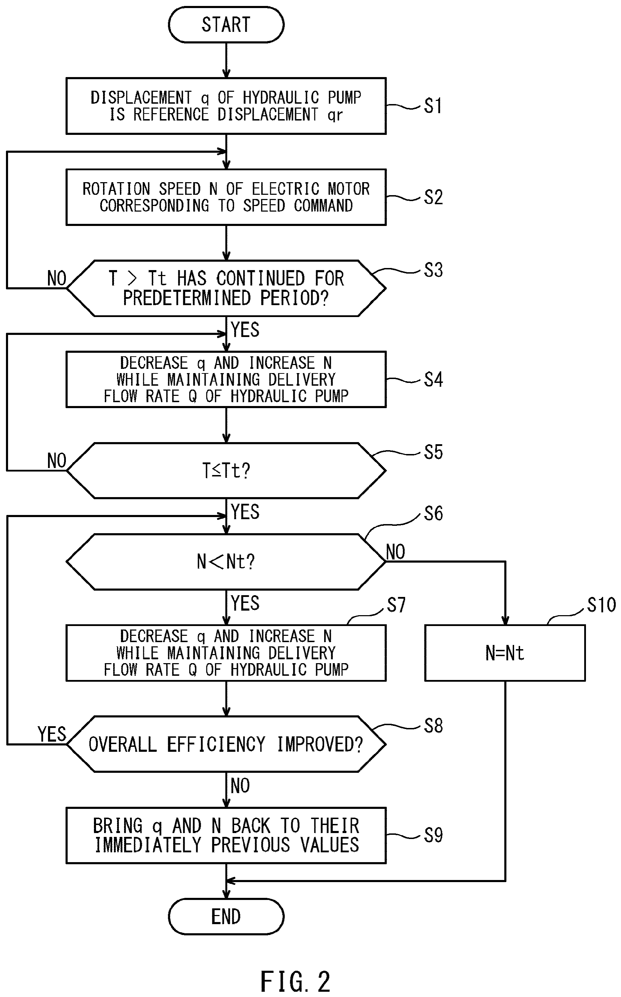

Next, control performed by the control circuitry 4 is described with reference to FIG. 2. First, the control circuitry 4 controls the regulator 21 such that the displacement q of the hydraulic pump 2 is a reference displacement qr (step S1). The reference displacement qr is, for example, a maximum displacement qmax.

In this state, when the operator 7 is operated, the control circuitry 4 controls the electric motor 3 such that the rotation speed N of the electric motor 3 is a rotation speed corresponding to a speed command to the hydraulic actuator 12 (step S2). Specifically, the main controlling circuitry 6 of the control circuitry 4 outputs, to the inverter 5, a rotation speed command that increases in accordance with an increase in the speed command.

Next, the control circuitry 4 determines whether or not a state where the torque T of the electric motor 3 exceeds a rated torque Tt has continued for a predetermined period (step S3). The rated torque Tt of the electric motor 3 is prestored in the main controlling circuitry 6. Although the predetermined period may be a fixed value (e.g., about 10 seconds), since the predetermined period depends on the torque T, the predetermined period may be a value that changes in accordance with the torque T. Since the torque T changes from moment to moment, the value of the torque T may be determined based on its time average value or filtered value.

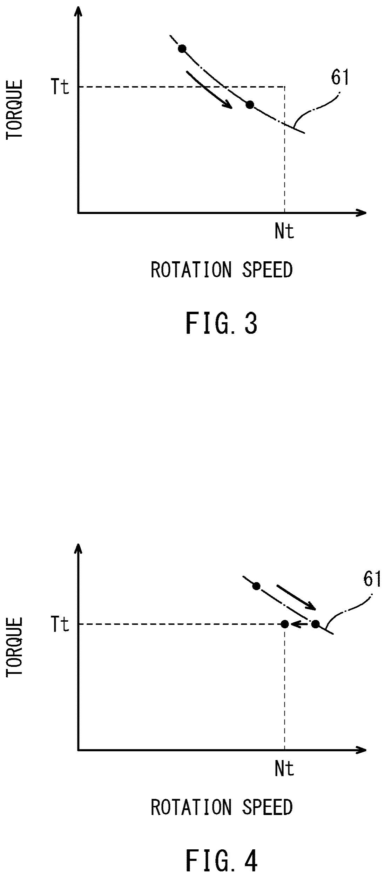

In a case where the state where the torque T of the electric motor 3 exceeds the rated torque Tt has not continued for the predetermined period (NO in step S3), the control circuitry 4 performs step S2 again. On the other hand, in a case where the state where the torque T of the electric motor 3 exceeds the rated torque Tt has continued for the predetermined period, the control circuitry 4 decreases the displacement q of the hydraulic pump 2 and increases the rotation speed N of the electric motor 3 under the condition that the delivery flow rate Q of the hydraulic pump 2 is maintained (step S4). Consequently, the operating state of the electric motor 3 shifts along a line 61 as shown in FIG. 3 and FIG. 4. For example, the line 61 is an equivalent horsepower line when the product of the delivery flow rate and the delivery pressure of the hydraulic pump 2 is constant.

Thereafter, the control circuitry 4 determines whether or not the torque T of the electric motor 3 has become the rated torque Tt or less (step S5). In a case where the torque T of the electric motor 3 has not become the rated torque Tt or less (No in step S5), the control circuitry 4 performs step S4 again. On the other hand, in a case where the torque T of the electric motor 3 has become the rated torque Tt or less (YES in step S5), the control circuitry 4 determines whether or not the rotation speed N of the electric motor 3 is less than a rated rotation speed Nt (step S6).

In a case where the rotation speed N of the electric motor 3 is not less than the rated rotation speed Nt (NO in step S6), in other words, in a case where the operating state of the electric motor 3 shifts, as shown in FIG. 4, along the line 61 passing outside a rated region that is defined by the rated rotation speed Nt and the rated torque Tt, the control circuitry 4 adjusts the rotation speed N of the electric motor 3 to the rated rotation speed Nt (step S10). That is, in a case where the rotation speed N of the electric motor 3 exceeds the rated rotation speed Nt, the control circuitry 4 decreases the rotation speed N of the electric motor 3 to the rated rotation speed Nt. In a case where the rotation speed N of the electric motor 3 exceeds the rated rotation speed Nt when the torque T of the electric motor 3 has become the rated torque Tt or less, the output of the electric motor 3 exceeds the rated output. In this case, the output of the electric motor 3 is adjusted to the rated output or less by sacrificing the speed of the hydraulic actuator 12.

On the other hand, in a case where the rotation speed N of the electric motor 3 is less than the rated rotation speed Nt (YES in step S6), in other words, in a case where the operating state of the electric motor 3 shifts, as shown in FIG. 3, along the line 61 passing through the inside of the rated region, the control circuitry 4 performs a process of decreasing the displacement q of the hydraulic pump 2 and increasing the rotation speed N of the electric motor 3 under the condition that the delivery flow rate Q of the hydraulic pump 2 is maintained (step S7).

Thereafter, the control circuitry 4 determines whether or not an overall efficiency η in converting electrical energy into hydraulic energy has improved (step S8). The electrical energy is the product of a voltage, an electric current, and a time, whereas the hydraulic energy is the product of a pressure, a flow rate, and a time. The overall efficiency η is the product of an electric motor efficiency ηm and a pump efficiency ηp.

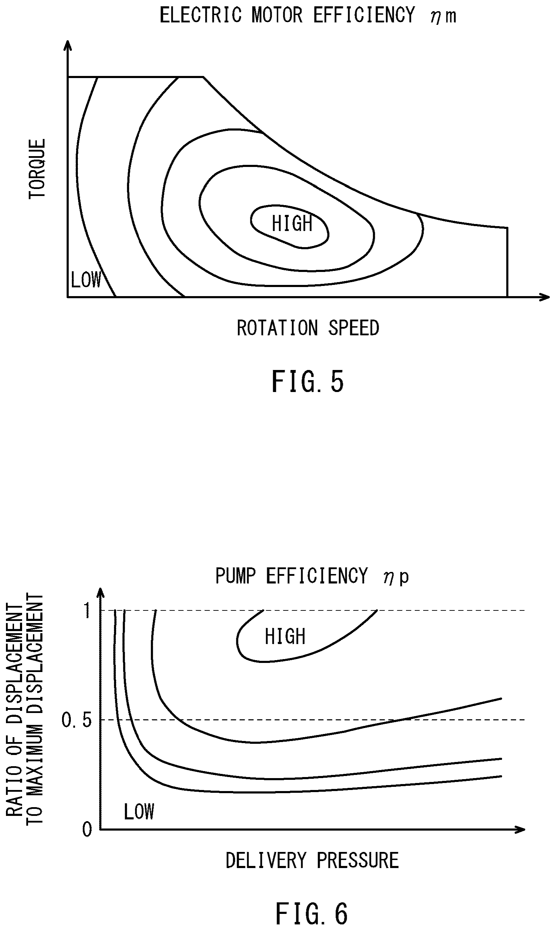

The main controlling circuitry 6 prestores therein a map of the electric motor efficiency ηm as shown in FIG. 5 and a map of the pump efficiency ηp as shown in FIG. 6. Alternatively, instead of using these maps, each of the electric motor efficiency ηm and the pump efficiency ηp may be converted into a function. The electric motor efficiency ηm takes the rotation speed and the torque as parameters, whereas the pump efficiency ηp takes the delivery pressure and the ratio of the displacement to the maximum displacement, i.e., q / qmax, as parameters. In the present embodiment, as shown in FIG. 1, the delivery pressure of the hydraulic pump 2 is detected by a pressure sensor 9.

In a case where the overall efficiency η has improved (YES in step S8), in other words, in a case where the overall efficiency η has increased, the control circuitry 4 performs step S6 and step S7 again. On the other hand, in a case where the overall efficiency η has not improved (NO in step S8), in other words, in a case where the overall efficiency η has decreased, the control circuitry 4 brings the displacement q of the hydraulic pump 2 and the rotation speed N of the electric motor 3 back to their values in step S7 immediately previously performed (step S9). Specifically, in a case where step S7 has been performed n times before reaching step S9, the displacement q of the hydraulic pump 2 and the rotation speed N of the electric motor 3 are set to their values in step S7 performed for the n-1th time.

In the hydraulic system 1 configured as described above, the output of the electric motor 3 exceeds the rated output only temporarily, and thereafter, the torque T of the electric motor 3 decreases to the rated torque Tt or less by the decreasing of the displacement q of the hydraulic pump 2 and the increasing of the rotation speed N of the electric motor 3. Therefore, the electric motor 3, whose rated output is less than the maximum output required for the electric motor 3, can be used. In addition, while the torque of the electric motor 3 is decreasing, since the delivery flow rate Q of the hydraulic pump 2 is maintained, the speed of the hydraulic actuator 12 is not affected.

Further, in the present embodiment, after the torque T of the electric motor 3 has decreased to the rated torque Tt or less, the process of decreasing the displacement q of the hydraulic pump 2 and increasing the rotation speed N of the electric motor 3 is repeatedly performed such that the overall efficiency η increases. This makes it possible to operate the electric motor 3 within the rated region with less energy consumption. Still further, in a case where the overall efficiency η has decreased, the displacement q of the hydraulic pump 2 and the rotation speed N of the electric motor 3 are brought back to their values in the process immediately previously performed. This makes it possible to readily determine a state where the energy consumption of the electric motor 3 is minimized.

### <Variations>

The present disclosure is not limited to the above-described embodiment. Various modifications can be made without departing from the scope of the present disclosure.

For example, the operator 7 may be eliminated, and autonomous operation may be performed. In this case, the control circuitry 4 may generate, on its own, the speed command to the hydraulic actuator 12 based on, for example, a camera image.

In the flowchart shown in FIG. 2, steps S6 to S10 can be eliminated.

### <Summary>

The present disclosure provides, as a first mode, a hydraulic system including: a hydraulic pump that supplies hydraulic oil to a hydraulic actuator at a time of moving the hydraulic actuator, the hydraulic pump being a variable displacement pump; an electric motor that drives the hydraulic pump; a regulator that changes a displacement of the hydraulic pump; and control circuitry that controls the electric motor and the regulator. When a state where a torque of the electric motor exceeds a rated torque has continued for a predetermined period, the control circuitry decreases the displacement of the hydraulic pump and increases a rotation speed of the electric motor under a condition that a delivery flow rate of the hydraulic pump is maintained, such that the torque of the electric motor becomes the rated torque or less.

According to the above configuration, the output of the electric motor exceeds the rated output only temporarily, and thereafter, the torque of the electric motor decreases to the rated torque or less by the decreasing of the displacement of the hydraulic pump and the increasing of the rotation speed of the electric motor. Therefore, the electric motor, whose rated output is less than the maximum output required for the electric motor, can be used. In addition, while the torque of the electric motor is decreasing, since the delivery flow rate of the hydraulic pump is maintained, the speed of the hydraulic actuator is not affected.

As a second mode, in the first mode, in a case where the rotation speed of the electric motor is less than a rated rotation speed when the torque of the electric motor has become the rated torque or less, the control circuitry may repeatedly perform a process of decreasing the displacement of the hydraulic pump and increasing the rotation speed of the electric motor under the condition that the delivery flow rate of the hydraulic pump is maintained, such that an overall efficiency in converting electrical energy into hydraulic energy increases. This configuration makes it possible to operate the electric motor within a rated region with less energy consumption.

As a third mode, in the second mode, in a case where the overall efficiency has decreased after the process, the control circuitry may bring the displacement of the hydraulic pump and the rotation speed of the electric motor back to their values in the process immediately previously performed. This configuration makes it possible to readily determine a state where the energy consumption of the electric motor is minimized.

As a fourth mode, in any one of the first to third modes, in a case where the rotation speed of the electric motor exceeds a rated rotation speed when the torque of the electric motor has become the rated torque or less, the control circuitry may decrease the rotation speed of the electric motor to the rated rotation speed. According to this configuration, in a case where the rotation speed of the electric motor exceeds the rated rotation speed when the torque of the electric motor has become the rated torque or less, the output of the electric motor exceeds the rated output. In this case, the output of the electric motor is adjusted to the rated output or less by sacrificing the speed of the hydraulic actuator.

As a fifth mode, in any one of the first to fourth modes, for example, the control circuitry may include: an inverter located between the electric motor and a power source; and main controlling circuitry that outputs a command to the inverter.

## Claims

1. A hydraulic system comprising:
a hydraulic pump that supplies hydraulic oil to a hydraulic actuator at a time of moving the hydraulic actuator, the hydraulic pump being a variable displacement pump;
an electric motor that drives the hydraulic pump;
a regulator that changes a displacement of the hydraulic pump; and
control circuitry that controls the electric motor and the regulator, wherein
when a state where a torque of the electric motor exceeds a rated torque has continued for a predetermined period, the control circuitry decreases the displacement of the hydraulic pump and increases a rotation speed of the electric motor under a condition that a delivery flow rate of the hydraulic pump is maintained, such that the torque of the electric motor becomes the rated torque or less.

2. The hydraulic system according to claim 1, wherein
in a case where the rotation speed of the electric motor is less than a rated rotation speed when the torque of the electric motor has become the rated torque or less, the control circuitry repeatedly performs a process of decreasing the displacement of the hydraulic pump and increasing the rotation speed of the electric motor under the condition that the delivery flow rate of the hydraulic pump is maintained, such that an overall efficiency in converting electrical energy into hydraulic energy increases.

3. The hydraulic system according to claim 2, wherein
in a case where the overall efficiency has decreased after the process, the control circuitry brings the displacement of the hydraulic pump and the rotation speed of the electric motor back to their values in the process immediately previously performed.

4. The hydraulic system according to any one of claims 1 to 3, wherein
in a case where the rotation speed of the electric motor exceeds a rated rotation speed when the torque of the electric motor has become the rated torque or less, the control circuitry decreases the rotation speed of the electric motor to the rated rotation speed.

5. The hydraulic system according to any one of claims 1 to 3, wherein
the control circuitry includes:
an inverter located between the electric motor and a power source; and
main controlling circuitry that outputs a command to the inverter.
